(19) Europäisches Patentamt
European Patent Office
Office européen des brevets

(11) EP 4 368 658 A1

(12) EUROPEAN PATENT APPLICATION
published in accordance with Art. 153(4) EPC

(43) Date of publication:
**15.05.2024 Bulletin 2024/20**

(21) Application number: **22837531.7**

(22) Date of filing: **28.06.2022**

(51) International Patent Classification (IPC):
***C08G 77/04** (2006.01)* ***C08G 77/08** (2006.01)*

(52) Cooperative Patent Classification (CPC):
**C08G 77/04; C08G 77/08**

(86) International application number:
**PCT/JP2022/025641**

(87) International publication number:
**WO 2023/282115 (12.01.2023 Gazette 2023/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.07.2021 JP 2021113895**

(71) Applicant: **SHIN-ETSU CHEMICAL CO., LTD.**
**Tokyo 1000005 (JP)**

(72) Inventors:
- **FUJITA Shoji**
  **Annaka-shi, Gunma 379-0224 (JP)**
- **WATANABE Takuma**
  **Annaka-shi, Gunma 379-0224 (JP)**

(74) Representative: **Angerhausen, Christoph**
**Boehmert & Boehmert**
**Anwaltspartnerschaft mbB**
**Pettenkoferstrasse 22**
**80336 München (DE)**

# (54) ORGANOPOLYSILOXANE AND PRODUCTION METHOD THEREFOR

(57) Provided are an organopolysiloxane in which arrangements of diphenylsiloxy units in the siloxane sequence are controlled to achieve a low proportion of arrangements where the diphenylsiloxy unit-containing siloxanes are consecutive; and a method for producing such organopolysiloxane. The organopolysiloxane is such that low-molecular siloxanes having a weight-average molecular weight of not higher than 700 are contained at a ratio of not larger than 10% by mass, and that a proportion of arrangements where diphenylsiloxy units are consecutive relative to all diphenylsiloxy units is not higher than 5 mol%.



Processed by Luminess, 75001 PARIS (FR)

## Description

TECHNICAL FIELD

The present invention relates to an organopolysiloxane and a production method thereof, particularly to a diphenylsiloxy unit-containing organopolysiloxane and a production method thereof.

BACKGROUND ART

Conventionally, it is known that compatibility to an organic resin, viscosity, and heat resistance can be improved by introducing diphenylsiloxy units into a polydimethylsiloxane.

As a method for producing a diphenylsiloxy unit-containing organopolysiloxane, there is known an equilibrium copolymerization method employing a diphenylsiloxy unit-containing cyclic siloxane as a raw material; and an alkali metal catalyst, silicate catalyst or the like as a catalyst. However, the problem with such equilibrium copolymerization method is that since the siloxane sequence is not controlled, there will be generated, as reaction by-products, cyclic compounds such as hexaphenylcyclotrisiloxane and octaphenylcyclotetrasiloxane in which diphenylsiloxy units are consecutive, and it is difficult to distil away these compounds.

In resent years, as a method for producing a sequence-controlled organopolysiloxane, there has been reported a ring-opening polymerization method utilizing a guanidine base as a catalyst (Patent document 1). With such ring-opening polymerization method, there can be obtained a block copolymer of organosiloxanes; however, since the block structure thereof includes arrangements where diphenylsiloxy units are consecutive, a side reaction during the polymerization may generate a phenyl cyclic compound that is difficult to be distilled away.

Further, there have also been reported methods utilizing a Lewis acidic boron compound as a catalyst (Patent documents 2 and 3). In these methods utilizing a Lewis acidic boron compound as a catalyst, there can be obtained an organopolysiloxane with a strictly controlled sequence depending on an order in which reagents are added; however, since dihydrosilane as a raw material has a low boiling point and a low flash point, there has been a safety issue.

PRIOR ART DOCUMENTS

Non-patent documents

Patent document 1: WO2018/051792
Patent document 2: WO2018/159756
Patent document 3: JP-A-2020-012007

SUMMARY OF THE INVENTION

Problems to be solved by the invention

It is an object of the present invention to provide an organopolysiloxane in which arrangements of diphenylsiloxy units in the siloxane sequence are controlled to achieve a low proportion of arrangements where the diphenylsiloxy unit-containing siloxanes are consecutive; and a production method thereof.

Means to solve the problems

In order to solve the above problems, the inventors of the present invention diligently conducted a series of studies, and completed the invention as follows. That is, the inventors found that via an equilibrium copolymerization that utilizes a Brønsted acid catalyst, there can be synthesized an organopolysiloxane having a low proportion of arrangements where diphenylsiloxy unit-containing siloxanes are consecutive.

Specifically, the present invention is to provide the following organopolysiloxane and a production method thereof.

<1> An organopolysiloxane represented by the following average composition formula (1)

[Chemical formula 1]

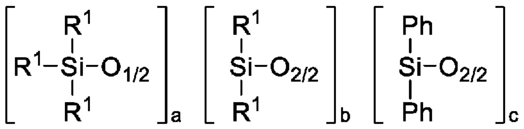

(1)

wherein in the formula (1), each $R^1$ independently represents a group selected from a hydrogen atom, a halogen atom, an alkyl group having 1 to 10 carbon atoms, an alkenyl group having 2 to 10 carbon atoms, an alkoxy group having 1 to 4 carbon atoms, an (meth)acryloxypropyl group, and an (meth)acryloxymethyl group; Ph represents a phenyl group; a is a number of 2 or larger, b is a number of 2 or larger, and c is a number of 1 or larger, provided that $5 \leq a+b+c \leq 500$, and

wherein the organopolysiloxane is such that low-molecular siloxanes having a weight-average molecular weight of not higher than 700 are contained at a ratio of not larger than 10% by mass, and that a proportion of arrangements where diphenylsiloxy units are consecutive relative to all the diphenylsiloxy units is not higher than 5 mol%.

<2> A method for producing the organopolysiloxane according to <1>, comprising

a step of reacting (A) an organosiloxane represented by the following general formula (2) and (B) a cyclic siloxane represented by the following general formula (3) under the presence of (C) a Brønsted acid catalyst, wherein at least 75 mol% of the cyclic siloxane (B) are a cyclic siloxane represented by the following general formula (4),

[Chemical formula 2]

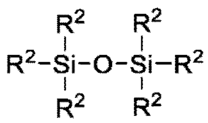

(2)

wherein in the formula (2), each $R^2$ independently represents a group selected from a hydrogen atom, a halogen atom, an alkyl group having 1 to 10 carbon atoms, an alkenyl group having 2 to 10 carbon atoms, an alkoxy group having 1 to 4 carbon atoms, an (meth)acryloxypropyl group, and an (meth)acryloxymethyl group,

[Chemical formula 3]

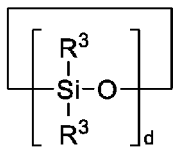

(3)

wherein in the formula (3), each $R^3$ independently represents a group selected from a hydrogen atom, an alkyl group having 1 to 10 carbon atoms, an alkenyl group having 2 to 10 carbon atoms, a phenyl group, an (meth)acryloxypropyl group, and an (meth)acryloxymethyl group; d is 3 or 4,

[Chemical formula 4]

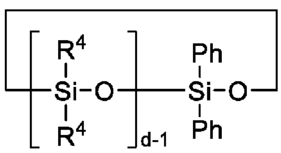

(4)

wherein in the formula (4), each $R^4$ independently represents a group selected from a hydrogen atom, an alkyl group having 1 to 10 carbon atoms, an alkenyl group having 2 to 10 carbon atoms, an (meth)acryloxypropyl group, and an (meth)acryloxymethyl group; Ph represents a phenyl group; d is defined as above.

<3> The method for producing the organopolysiloxane according to <2>, wherein the Brønsted acid catalyst is selected from sulfuric acid, trifluoromethanesulfonic acid, and bis(trifluoromethanesulfonyl)imide.

<4> The method for producing the organopolysiloxane according to <2> or <3>, wherein in the step of reacting (A) the organosiloxane represented by the general formula (2) and (B) the cyclic siloxane represented by the general formula (3) under the presence of (C) the Brønsted acid catalyst, a reaction temperature is 6 to 30°C.

Effects of the invention

With the production method of the present invention, there can be produced an organopolysiloxane having a low proportion of arrangements where diphenylsiloxy unit-containing siloxanes are consecutive. Further, purification is easier as there will be hardly generated cyclic compounds in which diphenylsiloxy units are consecutive, such as hexaphenylcyclotrisiloxane and octaphenylcyclotetrasiloxane. Further, intermolecular force can be improved by controlling arrangements, which allows there to be obtained an organopolysiloxane superior in heat resistance. Thus, the organopolysiloxane of the present invention is suitable for use in silicone oils, silicone rubbers and the like that are used in, for example, electronic devices, electric machines, automobiles, and cosmetic products.

MODE FOR CARRYING OUT THE INVENTION

The present invention is described in detail hereunder.

[Organopolysiloxane]

The organopolysiloxane of the present invention is represented by the following average composition formula (1).

[Chemical formula 5]

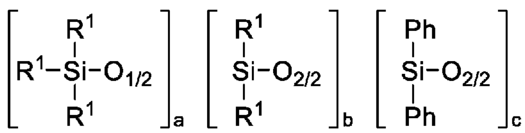

(1)

(In the formula (1), each $R^1$ independently represents a group selected from a hydrogen atom, a halogen atom, an alkyl group having 1 to 10 carbon atoms, an alkenyl group having 2 to 10 carbon atoms, an alkoxy group having 1 to 4 carbon atoms, an (meth)acryloxypropyl group, and an (meth)acryloxymethyl group. Ph represents a phenyl group. a is a number of 2 or larger, b is a number of 2 or larger, and c is a number of 1 or larger, provided that $5 \leq a+b+c \leq 500$.

In the formula (1), $R^1$ is selected from a hydrogen atom, a halogen atom, an alkyl group having 1 to 10 carbon atoms, an alkenyl group having 2 to 10 carbon atoms, an alkoxy group having 1 to 4 carbon atoms, an (meth)acryloxypropyl group, and an (meth)acryloxymethyl group. Examples of a halogen atom include a fluorine atom, a chlorine atom, a bromine atom, and an iodine atom. Examples of an alkyl group having 1 to 10 carbon atoms include an alkyl group such as a methyl group, an ethyl group, a propyl group, and a butyl group; and a cycloalkyl group such as a cyclopentyl group and a cyclohexyl group. Examples of an alkenyl group having 2 to 10 carbon atoms include a vinyl group and an allyl group. Examples of an alkoxy group having 1 to 4 carbon atoms include a methoxy group, an ethoxy group, a propoxy group, and a butoxy group.

In the formula (1), a is a number of 2 or larger, preferably 2 to 12; b is a number of 2 or larger, preferably 2 to 498, more preferably 4 to 250; c is a number of 1 or larger, preferably 1 to 100; a, b, and c satisfy $5 \leq a+b+c \leq 500$, preferably $5 \leq a+b+c \leq 250$. When a+b+c is larger than 500, a poor workability may be exhibited due to an increased viscosity.

The viscosity of the organopolysiloxane of the present invention is preferably 10 to 20,000 $mm^2/s$, more preferably 50 to 10,000 $mm^2/s$, most preferably 100 to 5,000 $mm^2/s$.

In this specification, viscosity is a value measured by a Cannon-Fenske viscometer described in JIS Z 8803:2011 at 25°C.

In the organopolysiloxane represented by the formula (1), low-molecular siloxanes having a weight-average molecular weight of not higher than 700 are contained at a ratio of not larger than 10% by mass, preferably not larger than 7% by mass, more preferably not larger than 5% by mass.

Here, in this specification, weight-average molecular weight is a value obtained via a GPC (gel permeation chromatography) analysis conducted under the following conditions, using polystyrene as a reference material.

[Measurement conditions]

Developing solvent: tetrahydrofuran (THF)
Flow rate: 0.6 mL/min
Detector: differential refractive index detector (RI)
Column:

TSK Guardcolumn Super H-H
TSKgel Super HM-N (6.0 mmI.D. × 15 cm × 1)
TSKgel Super H2500 (6.0 mmI.D. × 15 cm × 1)
(all by TOSOH CORPORATION)

Column temperature: 40°C
Sample injection volume: 50 μL (THF solution with a concentration of 0.3% by mass)

Relative to all the diphenylsiloxy units in the formula (1), a proportion of arrangements where diphenylsiloxy units are consecutive is not higher than 5 mol%, preferably not higher than 3 mol%, more preferably not higher than 1 mol%. When such proportion is greater than 5 mol%, there is a possibility of generating, as by-products, cyclic compounds such as hexaphenylcyclotrisiloxane and octaphenylcyclotetrasiloxane in which diphenylsiloxy units are consecutive.
Here, the proportion of arrangements where diphenylsiloxy units are consecutive refers to a value obtained by dividing an integrated area of peaks resulting from diphenylsiloxy units whose neighboring groups are diphenylsiloxy groups by an integrated area of peaks resulting from all diphenylsiloxy groups, in $^{29}$Si-NMR.
Specifically, for example, when the siloxane of the formula (1) is a dimethylsiloxane-diphenylsiloxane copolymer blocked by trimethylsiloxy groups $M_2D_mD^2\Phi_n$ (D represents a dimethylsiloxy unit, $D^2\Phi$ represents a diphenylsiloxy unit, and m and n each represent a number of 1 or larger), $^{29}$Si-NMR measurement detects a peak 1 resulting from M unit whose neighboring unit is $D^2\Phi$ in the vicinity of 10 ppm, a peak 2 resulting from M unit whose neighboring unit is D in the vicinity of 8 ppm, a peak 3 resulting from D unit in the vicinity of -20 to -22 ppm, a peak 4 resulting from $D^2\Phi$ unit whose neighboring unit is M or $D^2\Phi$ in the vicinity of -47 ppm, and a peak 5 resulting from $D^2\Phi$ unit whose neighboring unit is D in the vicinity of -48 ppm.
Here, when the integrated areas of the peaks 1, 4, and 5 are respectively x, y, and z, the integrated area of peaks resulting from diphenylsiloxy units whose neighboring groups are diphenylsiloxy groups is expressed by (y-x), and the integrated area of peaks resulting from all diphenylsiloxy groups is expressed by (y+z). Thus, the proportion p of arrangements where diphenylsiloxy units are consecutive is calculated by the following formula.

[Formula 1]

$$p = (y - x) / (y + z)$$

[Production method of organopolysiloxane]

A production method of the organopolysiloxane of the present invention (which may be abbreviated as "the production method of the present invention" hereunder) is characterized by having a step of reacting (A) an organosiloxane represented by the following general formula (2) and (B) a cyclic siloxane represented by the following general formula (3) under the presence of (C) a Brønsted acid catalyst.

[Chemical formula 6]

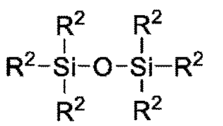
(2)

(In the formula (2), each $R^2$ independently represents a group selected from a hydrogen atom, a halogen atom, an alkyl group having 1 to 10 carbon atoms, an alkenyl group having 2 to 10 carbon atoms, an alkoxy group having 1

to 4 carbon atoms, an (meth)acryloxypropyl group, and an (meth)acryloxymethyl group.)

[Chemical formula 7]

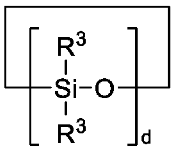 (3)

(In the formula (3), each $R^3$ independently represents a group selected from a hydrogen atom, an alkyl group having 1 to 10 carbon atoms, an alkenyl group having 2 to 10 carbon atoms, a phenyl group, an (meth)acryloxypropyl group, and an (meth)acryloxymethyl group. d is 3 or 4. Further, at least 75 mol% of the cyclic siloxane (B) are a cyclic siloxane represented by the following general formula (4).)

[Chemical formula 8]

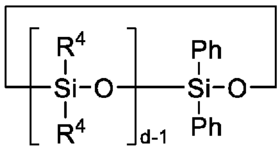 (4)

(In the formula (4), each $R^4$ independently represents a group selected from a hydrogen atom, an alkyl group having 1 to 10 carbon atoms, an alkenyl group having 2 to 10 carbon atoms, an (meth)acryloxypropyl group, and an (meth)acryloxymethyl group. Ph represents a phenyl group. d is defined as above.)

In the formula (2), $R^2$ is selected from a hydrogen atom, a halogen atom, an alkyl group having 1 to 10 carbon atoms, an alkenyl group having 2 to 10 carbon atoms, a phenyl group, an alkoxy group having 1 to 4 carbon atoms, an (meth)acryloxypropyl group, and an (meth)acryloxymethyl group. Examples of a halogen atom include a fluorine atom, a chlorine atom, a bromine atom, and an iodine atom. Examples of an alkyl group having 1 to 10 carbon atoms include an alkyl group such as a methyl group, an ethyl group, a propyl group, and a butyl group; and a cycloalkyl group such as a cyclopentyl group and a cyclohexyl group. Examples of an alkenyl group having 2 to 10 carbon atoms include a vinyl group and an allyl group. Examples of an alkoxy group having 1 to 4 carbon atoms include a methoxy group, an ethoxy group, a propoxy group, and a butoxy group.

In the formula (3), $R^3$ is selected from a hydrogen atom, an alkyl group having 1 to 10 carbon atoms, an alkenyl group having 2 to 10 carbon atoms, a phenyl group, an (meth)acryloxypropyl group, and an (meth)acryloxymethyl group. Examples of an alkyl group having 1 to 10 carbon atoms include an alkyl group such as a methyl group, an ethyl group, a propyl group, and a butyl group; and a cycloalkyl group such as a cyclopentyl group and a cyclohexyl group. Examples of an alkenyl group having 2 to 10 carbon atoms include a vinyl group and an allyl group. Among them, preferred are an alkyl group and a phenyl group; particularly preferred are a methyl group and a phenyl group.

In the formula (4), $R^4$ is selected from a hydrogen atom, an alkyl group having 1 to 10 carbon atoms, an alkenyl group having 2 to 10 carbon atoms, an (meth)acryloxypropyl group, and an (meth)acryloxymethyl group. Examples of an alkyl group having 1 to 10 carbon atoms include an alkyl group such as a methyl group, an ethyl group, a propyl group, and a butyl group; and a cycloalkyl group such as a cyclopentyl group and a cyclohexyl group. Examples of an alkenyl group having 2 to 10 carbon atoms include a vinyl group and an allyl group. Among them, preferred is an alkyl group; particularly preferred is a methyl group.

In this specification, a Brønsted acid catalyst refers to a compound (catalyst) capable of yielding a Brønsted acid in a reaction system.

As the Brønsted acid catalyst used in the production method of the present invention, there may be listed, for example, sulfuric acid, trifluoromethanesulfonic acid, and bis(trifluoromethanesulfonyl)imide. Among these Brønsted acid catalysts, trifluoromethanesulfonic acid is most preferable.

In the production method of the present invention, a molar ratio of the compound of the formula (3) (including the compound of the formula (4)) to the compound of the formula (2) is preferably 1 to 166 folds, more preferably 1 to 83 folds. Further, the compound of the formula (4) is preferably contained in the compound of the formula (3) at a ratio of 75 to 100 mol%, more preferably 90 to 100 mol%. When the compound of the formula (4) is contained at a ratio of lower than 75 mol%, heat resistance may not be expressed as an effect of improving intermolecular force, which is

brought about by the arrangement control, will be of lesser degree.

In the production method of the present invention, there are no particular restrictions on the amount of the Brønsted acid catalyst used (mass). The amount of the Brønsted acid catalyst used may be appropriately selected depending on an intended purpose; it is preferred that the Brønsted acid catalyst be used in an amount of 100 to 50,000 ppm, more preferably 250 to 25,000 ppm, most preferably 500 to 10,000 ppm, per a total used amount (total mass) of the organopolysiloxane represented by the formula (1) and the cyclic siloxane represented by the formula (2). The reaction can be efficiently promoted when the amount of the Brønsted acid catalyst is within these ranges.

In the production method of the present invention, in the step of reacting (A) the organosiloxane represented by the general formula (2) and (B) the cyclic siloxane represented by the general formula (3) under the presence of (C) the Brønsted acid catalyst, a reaction temperature is preferably 6 to 30°C, more preferably 15 to 25°C, most preferably 20 to 25°C. When the reaction temperature is greater than 30°C, an unwanted side reaction such as elimination of phenyl groups may proceed.

In the production method of the present invention, there are no particular restrictions on reaction conditions such as a reaction time and a solvent used. The reaction time is preferably 1 to 60 hours, more preferably 2 to 48 hours, most preferably 4 to 24 hours. A solvent may or may not be used; if used, preferred are saturated hydrocarbons such as octane and decane.

The production method of the present invention may have a step of filtering away an obtained precipitate after the reaction under the presence of (C) the Brønsted acid catalyst is over. Such step of filtering away the precipitate can be performed by a known method.

## WORKING EXAMPLES

The present invention is described in greater detail hereunder with reference to working and comparative examples. However, the present invention may be appropriately modified so long as the modification does not depart from the gist of the invention. Thus, the scope of the present invention shall not be construed by the following specific examples in a limited manner.

Here, a weight-average molecular weight and number average molecular weight that are mentioned in the working examples are values obtained via a GPC (gel permeation chromatography) analysis conducted under the following conditions, using polystyrene as a reference material.

Further, a low-molecular siloxane content ratio was calculated based on a value obtained by dividing peak areas of those with a weight-average molecular weight of not higher than 700 by a total sum of all peak areas.

[Measurement conditions]

Developing solvent: tetrahydrofuran (THF)
Flow rate: 0.6 mL/min
Detector: differential refractive index detector (RI)
Column:

TSK Guardcolumn Super H-H
TSKgel Super HM-N (6.0 mmI.D. × 15 cm × 1)
TSKgel Super H2500 (6.0 mmI.D. × 15 cm × 1)
(all by TOSOH CORPORATION)

Column temperature: 40°C
Sample injection volume: 50 μL (THF solution with a concentration of 0.3% by mass)

Viscosity is a value measured by Cannon-Fenske viscometer described in JIS Z 8803:2011 at 25°C. Further, refractive index (nD) is a value measured by an Abbe refractometer described in JIS K 0062:1992 at 25°C.

<Working example 1>

Here, 21.7 g of hexamethyldisiloxane, 278.3 g of 2,2,4,4-tetramethyl-6,6-diphenylcyclotrisiloxane, and 0.6 g of trifluoromethanesulfonic acid were put into a separable flask equipped with a thermometer, a stirrer, and a nitrogen gas introduction tube, and were then reacted at 20°C under a nitrogen atmosphere for four hours. Next, 3.6 g of KYOWAAD 500SH (by Kyowa Chemical Industry Co., Ltd.) was added, and stirring was performed at 20°C for two hours before

carrying out pressure filtration to filter away a white precipitate. A crude product obtained was then subjected to distillation under a reduced pressure of 3 mm Hg at an inner temperature of 160°C, thereby obtaining a colorless transparent liquid having the following properties.
viscosity 410 $mm^2/s$; refractive index 1.5074; number average molecular weight 2,400; weight-average molecular weight 3,430; low-molecular siloxane content ratio 4% by mass; proportion of arrangements where diphenylsiloxy units are consecutive 1.3 mol%

<Working example 2>

Here, 24.7 g of 1,3-divinyltetramethyldisiloxane, 275.3 g of 2,2,4,4-tetramethyl-6,6-diphenylcyclotrisiloxane, and 0.6 g of trifluoromethanesulfonic acid were put into a separable flask equipped with a thermometer, a stirrer, and a nitrogen gas introduction tube, and were then reacted at 20°C under a nitrogen atmosphere for four hours. Next, 3.6 g of KYOWAAD 500SH (by Kyowa Chemical Industry Co., Ltd.) was added, and stirring was performed at 20°C for two hours before carrying out pressure filtration to filter away a white precipitate. A crude product obtained was then subjected to distillation under a reduced pressure of 3 mm Hg at an inner temperature of 160°C, thereby obtaining a colorless transparent liquid having the following properties.
viscosity 380 $mm^2/s$; refractive index 1.5094; number average molecular weight 2,100; weight-average molecular weight 3,360; low-molecular siloxane content ratio 4% by mass; proportion of arrangements where diphenylsiloxy units are consecutive 0.4 mol%

<Working example 3>

Here, 18.2 g of 1,1,3,3-tetramethyldisiloxane, 281.8 g of 2,2,4,4-tetramethyl-6,6-diphenylcyclotrisiloxane, and 0.6 g of trifluoromethanesulfonic acid were put into a separable flask equipped with a thermometer, a stirrer, and a nitrogen gas introduction tube, and were then reacted at 20°C under a nitrogen atmosphere for four hours. Next, 3.6 g of KYOWAAD 500SH (by Kyowa Chemical Industry Co., Ltd.) was added, and stirring was performed at 20°C for two hours before carrying out pressure filtration to filter away a white precipitate. A crude product obtained was then subjected to distillation under a reduced pressure of 3 mm Hg at an inner temperature of 160°C, thereby obtaining a colorless transparent liquid having the following properties.
viscosity 320 $mm^2/s$; refractive index 1.5084; number average molecular weight 2,030; weight-average molecular weight 3,200; low-molecular siloxane content ratio 6% by mass; proportion of arrangements where diphenylsiloxy units are consecutive 0.4 mol%

<Working example 4>

Here, 38.1 g of 1,3-bis(acryloxymethyl)tetramethyldisiloxane, 261.9 g of 2,2,4,4-tetramethyl-6,6-diphenylcyclotrisiloxane, and 0.6 g of trifluoromethanesulfonic acid were put into a separable flask equipped with a thermometer, a stirrer, and a nitrogen gas introduction tube, and were then reacted at 20°C under a nitrogen atmosphere for four hours. Next, 3.6 g of KYOWAAD 500SH (by Kyowa Chemical Industry Co., Ltd.) was added, and stirring was performed at 20°C for two hours before carrying out pressure filtration to filter away a white precipitate. A crude product obtained was then subjected to distillation under a reduced pressure of 3 mm Hg at an inner temperature of 160°C, thereby obtaining a colorless transparent liquid having the following properties.
viscosity 340 $mm^2/s$; refractive index 1.5094; number average molecular weight 2,000; weight-average molecular weight 3,150; low-molecular siloxane content ratio 7% by mass; proportion of arrangements where diphenylsiloxy units are consecutive 2.1 mol%

<Working example 5>

Here, 1.8 g of hexamethyldisiloxane, 28.2 g of 2,2,4,4,6,6-hexamethyl-8,8-diphenylcyclotetrasiloxane, and 0.3 g of trifluoromethanesulfonic acid were put into a separable flask equipped with a thermometer, a stirrer, and a nitrogen gas introduction tube, and were then reacted at 20°C under a nitrogen atmosphere for four hours. Next, 1.8 g of KYOWAAD 500SH (by Kyowa Chemical Industry Co., Ltd.) was added, and stirring was performed at 20°C for two hours before carrying out pressure filtration to filter away a white precipitate. A crude product obtained was then subjected to distillation under a reduced pressure of 3 mm Hg at an inner temperature of 190°C, thereby obtaining a colorless transparent liquid having the following properties.
viscosity 300 $mm^2/s$; refractive index 1.4897; number average molecular weight 3,310; weight-average molecular weight 5,360; low-molecular siloxane content ratio 9% by mass; proportion of arrangements where diphenylsiloxy units are consecutive 0.7 mol%

<Comparative example 1>

Here, 24.7 g of 1,3-divinyltetramethyldisiloxane, 117.8 g of octamethylcyclotetrasiloxane, 157.5 g of octaphenylcyclotetrasiloxane, and 0.6 g of trifluoromethanesulfonic acid were put into a separable flask equipped with a thermometer, a stirrer, and a nitrogen gas introduction tube, and were then reacted at 20°C under a nitrogen atmosphere for four hours. However, ring-opening polymerization of octaphenylcyclotetrasiloxane did not proceed.

<Comparative example 2>

Here, 24.7 g of 1,3-divinyltetramethyldisiloxane, 117.8 g of octamethylcyclotetrasiloxane, 157.5 g of octaphenylcyclotetrasiloxane, and 2.0 g of a potassium siliconate containing 3% by mass of potassium hydroxide (by Shin-Etsu Chemical Co., Ltd.) were put into a separable flask equipped with a thermometer, a stirrer, and a nitrogen gas introduction tube, and were then reacted at 130°C under a nitrogen atmosphere for four hours. Next, 2-chloroethanol was used to perform neutralization, and low-boiling-point components were distilled away to obtain a colorless transparent liquid having the following properties.
viscosity 340 $mm^2/s$; refractive index 1.5010; number average molecular weight 2,690; weight-average molecular weight 3,850; low-molecular siloxane content ratio 23% by mass; proportion of arrangements where diphenylsiloxy units are consecutive 50 mol%

<Comparative example 3>

Here, 24.7 g of 1,3-divinyltetramethyldisiloxane, 275.3 g of 2,2,4,4-tetramethyl-6,6-diphenylcyclotrisiloxane, and 2.0 g of a potassium siliconate containing 3% by mass of potassium hydroxide (by Shin-Etsu Chemical Co., Ltd.) were put into a separable flask equipped with a thermometer, a stirrer, and a nitrogen gas introduction tube, and were then reacted at 130°C under a nitrogen atmosphere for four hours. Next, 2-chloroethanol was used to perform neutralization, and low-boiling-point components were distilled away to obtain a colorless transparent liquid.
viscosity 9,630 $mm^2/s$; refractive index 1.5015; number average molecular weight 11,730; weight-average molecular weight 20,640; low-molecular siloxane content ratio 27% by mass; proportion of arrangements where diphenylsiloxy units are consecutive 49 mol%

[Heat resistance test]

A heat resistance test was performed on the organopolysiloxane obtained in the working example 1, which was an organopolysiloxane with both ends being blocked by a trimethylsilyl group, and in which the proportion of arrangements where diphenylsiloxy units were consecutive was 1.3 mol%. As a comparable, there was used KF-54 (by Shin-Etsu Chemical Co., Ltd.) having a siloxane composition similar to that of the working example 1, and in which the proportion of arrangements where diphenylsiloxy units were consecutive was 40 to 50 mol%. As a result of calculating a rate of decrease in weight after performing heating under air atmosphere at 300°C for 12 hours, while KF-54 exhibited a rate of 25%, the organopolysiloxane of the working example 1 exhibited a rate of 20%.

## Claims

1. An organopolysiloxane represented by the following average composition formula (1)

[Chemical formula 1]

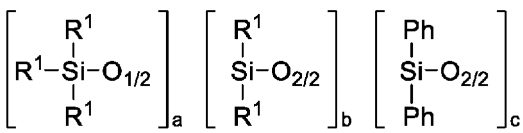

(1)

wherein in the formula (1), each $R^1$ independently represents a group selected from a hydrogen atom, a halogen atom, an alkyl group having 1 to 10 carbon atoms, an alkenyl group having 2 to 10 carbon atoms, an alkoxy group having 1 to 4 carbon atoms, an (meth)acryloxypropyl group, and an (meth)acryloxymethyl group; Ph represents a phenyl group; a is a number of 2 or larger, b is a number of 2 or larger, and c is a number of 1 or larger, provided that $5 \leq a+b+c \leq 500$, and

wherein the organopolysiloxane is such that low-molecular siloxanes having a weight-average molecular weight of not higher than 700 are contained at a ratio of not larger than 10% by mass, and that a proportion of arrangements where diphenylsiloxy units are consecutive relative to all the diphenylsiloxy units is not higher than 5 mol%.

**2.** A method for producing the organopolysiloxane according to claim 1, comprising a step of reacting (A) an organosiloxane represented by the following general formula (2) and (B) a cyclic siloxane represented by the following general formula (3) under the presence of (C) a Brønsted acid catalyst, wherein at least 75 mol% of the cyclic siloxane (B) are a cyclic siloxane represented by the following general formula (4),

[Chemical formula 2]

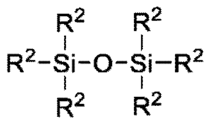

(2)

wherein in the formula (2), each $R^2$ independently represents a group selected from a hydrogen atom, a halogen atom, an alkyl group having 1 to 10 carbon atoms, an alkenyl group having 2 to 10 carbon atoms, an alkoxy group having 1 to 4 carbon atoms, an (meth)acryloxypropyl group, and an (meth)acryloxymethyl group,

[Chemical formula 3]

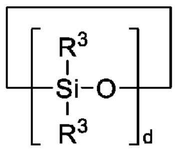

(3)

wherein in the formula (3), each $R^3$ independently represents a group selected from a hydrogen atom, an alkyl group having 1 to 10 carbon atoms, an alkenyl group having 2 to 10 carbon atoms, a phenyl group, an (meth)acryloxypropyl group, and an (meth)acryloxymethyl group; d is 3 or 4,

[Chemical formula 4]

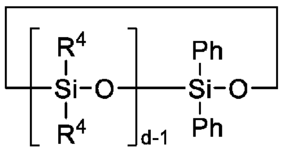

(4)

wherein in the formula (4), each $R^4$ independently represents a group selected from a hydrogen atom, an alkyl group having 1 to 10 carbon atoms, an alkenyl group having 2 to 10 carbon atoms, an (meth)acryloxypropyl group, and an (meth)acryloxymethyl group; Ph represents a phenyl group; d is defined as above.

**3.** The method for producing the organopolysiloxane according to claim 2, wherein the Brønsted acid catalyst is selected from sulfuric acid, trifluoromethanesulfonic acid, and bis(trifluoromethanesulfonyl)imide.

**4.** The method for producing the organopolysiloxane according to claim 2 or 3, wherein in the step of reacting (A) the organosiloxane represented by the general formula (2) and (B) the cyclic siloxane represented by the general formula (3) under the presence of (C) the Brønsted acid catalyst, a reaction temperature is 6 to 30°C.

**INTERNATIONAL SEARCH REPORT**

International application No. **PCT/JP2022/025641**

**A. CLASSIFICATION OF SUBJECT MATTER**

***C08G 77/04***(2006.01)i; ***C08G 77/08***(2006.01)i
FI: C08G77/04; C08G77/08

According to International Patent Classification (IPC) or to both national classification and IPC

**B. FIELDS SEARCHED**

Minimum documentation searched (classification system followed by classification symbols)

C08G77/04; C08G77/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br><br>Y | KAZMIERSKI, Krzysztof et al. Cationic Ring Opening Polymerization of Cyclotrisiloxanes with Mixed Siloxane Units. ACS Div. Polym. Chem. 1998, pp. 439-440, in particular, Experimental, Result and Discussions<br>Experimental, Result and Discussions | 1<br><br>1-4 |
| Y | JP 58-179232 A (GENERAL ELECTRIC CO) 20 October 1983 (1983-10-20)<br>claim 1 | 1-4 |
| Y | JP 2016-531183 A (MOMENTIVE PERFORMANCE MATERIALS INC) 06 October 2016 (2016-10-06)<br>claims | 1-4 |
| A | JP 8-183859 A (SHIN ETSU CHEM CO LTD) 16 July 1996 (1996-07-16)<br>claims, examples | 1-4 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 August 2022** | **13 September 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/025641**

| Patent document cited in search report | Publication date (day/month/year) | Patent family member(s) | Publication date (day/month/year) |
|---|---|---|---|
| JP 58-179232 A | 20 October 1983 | US 3842110 A<br>claim 1 | |
| JP 2016-531183 A | 06 October 2016 | US 2016/0355643 A1<br>claims<br>WO 2015/026691 A1<br>EP 3036272 A1 | |
| JP 8-183859 A | 16 July 1996 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2018051792 A
- WO 2018159756 A
- JP 2020012007 A